# EUROPEAN PATENT APPLICATION

(11) **EP 4 799 856 A1**
(43) Date of publication of application: **02.09.2026**
(21) Application number: 26158140.9
(22) Date of filing: 12.02.2026
(51) Int. Cl.: B60L 53/62, B60L 53/63, B60L 53/64, B60L 53/65, B60L 53/66, B60L 53/80, B60L 58/16

(54) **DETECTION METHOD FOR ABNORMALLY CHARGED BATTERY AND BATTERY ENERGY STATIONS THEREOF**

(30) Priority: 27.02.2025 TW 114107393
(71) Applicant: Kwang Yang Motor Co., Ltd., Kaohsiung City (TW)
(72) Inventor: LIU, Yu-Rui, Kaohsiung (TW); HSU, Chi-Hui, Kaohsiung (TW)
(74) Representative: Savi, Massimiliano

(57) **Abstract**

A detection method for an abnormally charged battery and a battery energy station (100) thereof are provided. Firstly, obtaining a state of charge corresponding to a battery (112) at a first time point, where the battery (112) is placed in the battery energy station (100) before a second time point, and the second time point is earlier than the first time point. In addition, when the state of charge corresponding to the battery (112) is lower than a charging threshold, recharging the battery (112), and reobtaining the state of charge corresponding to the battery (112), where the third time point is later than the first time point. Lastly, when the state of charge corresponding to the battery (112) is still lower than the charging threshold, identifying the battery (112) as being in an abnormal charging state.

## Description

### 1. Field of the Invention

The present invention relates to a detection method for an abnormally charged battery and a battery station thereof, and more particularly to a detection method and a battery station thereof that can automatically charge a battery and determine whether the battery is an abnormally charged battery based on a state-of-charge (SOC) of the battery at different time points.

### 2. Description of Related Art

In recent years, with the rise of environmental awareness and advancements of electric vehicle technology, developments of electric vehicles powered by electricity to replace traditional vehicles powered by fossil fuels have gradually become an important goal in automotive field, making electric vehicles (EVs) more and more popular. In order to increase the range and willingness of using EVs, many countries or cities have begun to plan to set up EV charging stations and battery energy stations in public places to provide EVs and/or electric scooters for charging or battery replacement, making the use of electric vehicles more convenient.

For different electric vehicles, the charging or battery requirements during peak and off-peak hours may differ. For example, the battery demand for electric motorcycles is higher during peak hours than during off-peak hours. During peak hours, battery power stations need to charge the batteries at high speeds to quickly bring them to full charge. However, during off-peak hours, because battery demand is lower, battery energy stations can charge the batteries slowly to meet specific battery needs while saving costs. Furthermore, different electric vehicles may also have different battery quantity requirements.

On the other hand, since battery charging takes time, electric motorcycle users often rely on battery swapping to replenish energy during busy commuting hours. Battery swapping is generally a significant cost for battery manufacturers, and rechargeable batteries have a limited lifespan. Therefore, properly managing the charging and swapping of batteries in battery energy stations, and effectively managing malfunctioning batteries, has become a pressing issue for the industry.

In view of this, the present invention provides a detection method for an abnormally charged battery and battery energy stations thereof.

An embodiment of the detection method is adapted to a battery energy station. Firstly, obtain a state of charge corresponding to a battery at a first time point, where the battery is placed in the battery energy station before a second time point, and the second time point is earlier than the first time point. In addition, determine whether the state of charge corresponding to the battery is lower than a charging threshold at the first time point. When the state of charge corresponding to the battery is lower than the charging threshold, recharge the battery, reobtain the state of charge corresponding to the battery at a third time point, and determine whether the state of charge corresponding to the battery is still lower than the charging threshold, where the third time point is later than the first time point. Lastly, when the state of charge corresponding to the battery is still lower than the charging threshold, identify the battery as being in an abnormal charging state.

An embodiment of the battery energy station includes a battery storage system, an energy module that charges batteries, and a processor unit. The battery that is to be detected is placed in the battery storage system before a second time point. The processor unit is coupled to the battery storage system and the energy module, and obtains a state of charge corresponding to the battery at a first time point which is earlier than the second time point.

The processor unit determines whether the state of charge corresponding to the battery is lower than a charging threshold at the first time point. When the state of charge corresponding to the charging threshold is lower than the charging threshold, the processor unit recharges the battery via the energy module, reobtains the state of charge corresponding to the battery at a third time point that is later than the first time point, and determines whether the state of charge corresponding to the battery is still lower than the charging threshold at the third time point. When the state of charge corresponding to the battery is still lower than the charging threshold, the processor unit identifies the battery as being in an abnormal charging state.

In some embodiments, the battery energy station transmits an abnormal state notification via a network to a remote server.

In some embodiments, when the state of charge corresponding to the battery is still lower than the charging threshold at the third time point, the battery energy station locks the battery, and excludes the battery from a battery swapping process.

In some embodiments, when the state of charge corresponding to the battery is still lower than the charging threshold at the third time point, the battery energy station notes a charging anomaly event associated with the abnormal charging state corresponding to the battery, and determines whether a specific event occurs. When the specific event occurs at the battery energy station, the charging anomaly event is deleted.

In some embodiments, the specific event includes at least one of the following scenarios: the state of charge corresponding to the battery is higher than the charging threshold, the battery is taken out during a battery swapping process, or the battery energy station is restarted.

The above-described method of the present invention can exist through a program code. When the program code is loaded and executed by a machine, the machine becomes an apparatus for implementing the present invention.

In order to make the above-mentioned objects, features and advantages of the present invention more apparent and understandable, embodiments are described below in detail with reference to the accompanying drawings.

In the drawings:
Fig. 1 is a schematic diagram of one embodiment of a battery energy station of the present invention.
Fig. 2 is a schematic diagram of another embodiment of the battery energy station of the present invention connecting to a remote server via a network.
Fig. 3 is a flow diagram of one embodiment of a detection method for an abnormally charged battery of the present invention.
Fig. 4 is a flow diagram of another embodiment of the detection method for the abnormally charged battery of the present invention.
Fig. 5 is a flow diagram of further another embodiment of the detection method for the abnormally charged battery of the present invention.
Fig. 6 is a flow diagram of yet another embodiment of the detection method for the abnormally charged battery of the present invention.

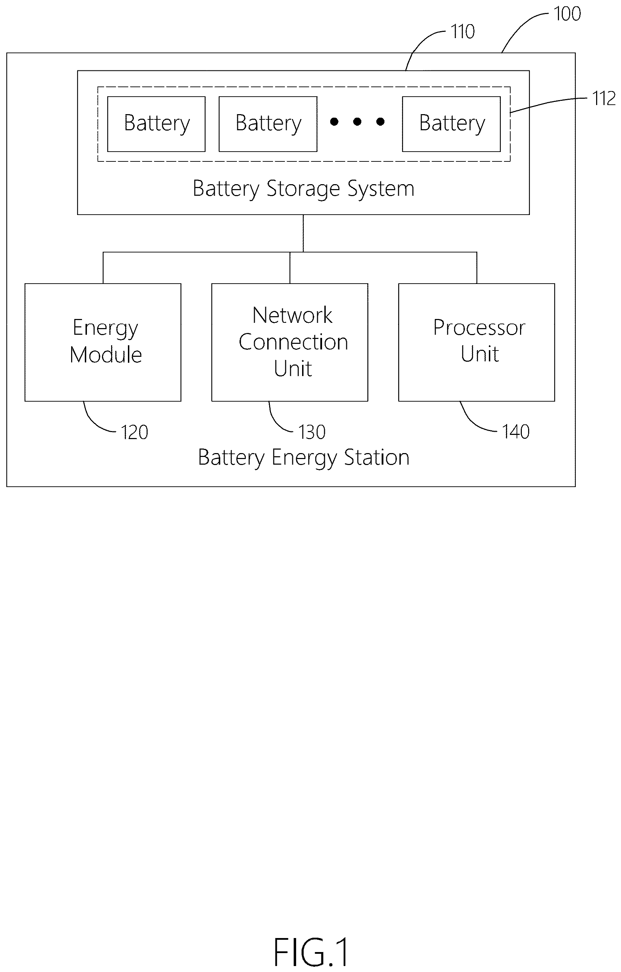

With reference to Fig. 1, Fig. 1 is a schematic diagram of one embodiment of a battery energy station 100 of the present invention. The battery energy station 100 can be applied to an electronic device. As shown in Fig. 1, the battery energy station 100 includes a battery storage system 110, an energy module 120, a network connection unit 130, and a processor unit 140. The battery storage system 110 incudes a specific mechanism (not shown in the figure) for storing a battery 112, and selectivity locking and releasing the battery 112. In some embodiments, the battery storage system 110 can store a plurality of batteries. Additionally, the battery storage system 110 can provide the battery 112 for consumption by at least one electrical device, such as electric vehicles, including electric scooters or electric cars. The energy module 120 is electrically connected to a power grid (not shown in the figure) for drawing a total current to supply the electricity needs of the battery energy station 100, and the energy module 120 can charge the battery 112 based on a signal from the processor unit 140. It must be stated that, the battery storage system 110 can include a respective charging module corresponding to the battery 112. The charging module includes a charging current between an upper limit current and a lower limit current to charge the corresponding battery 112. It is worth noting that, in some embodiments, the energy module 120 can actively detect the total current from the power grid supplying the battery energy station 100, and notifies an information corresponding to the total current to the processor unit 140. The network connection unit 130 connects to a network, thus enabling the battery energy station 100 to have a capability of network connection. In some embodiments, the network may include a wired network, a telecommunications network, or a wireless network, such as a Wi-Fi network. The processor unit 140 can control the operation of all hardware and all software in the battery energy station 100, and execute a detection method of the present invention. A more detailed explanation of the control and the execution will be presented in a subsequent section.

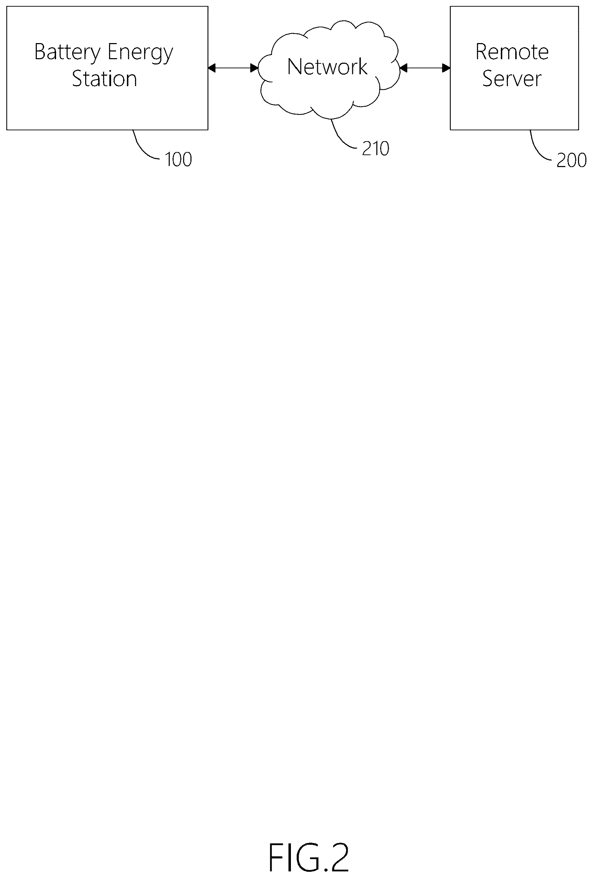

With reference to Fig. 2, Fig. 2 is a schematic diagram of another embodiment of the battery energy station 100 of the present invention connecting to a remote server 200 via a network 210. Similarly, the battery energy station 100 can also be applied to an electronic device, which stores the battery 112, and can provide the battery 112 for consumption by at least one electrical device, such as electric vehicles, including electric scooters or electric cars. The battery energy station 100 can include components similar to those shown in Fig. 1, so the details of which will not be reiterated here. The battery energy station 100 can connect to a remote server 200 through a network 210 via the network connection unit 130. The network 210 includes at least one of the following: the wired network, the telecommunications network, or the wireless network, such as the Wi-Fi network. It is worth noting that, in some embodiments, the remote server 200 can simultaneously manage other battery energy stations 100 located at the same, or different, locations. As mentioned before, the energy module 120 can actively detect the total current from the power grid supplying to the battery energy station 100, and notifies the information corresponding to the total current to the processor unit 140. In some embodiments, the remote server 200 can also notify the information corresponding to the total current to the battery energy station 100 through the network 210. In some embodiments, the remote server 200 can also transmit information related to different time periods, such as peak hours and off-peak hours, to the battery energy station 100 through the network 210. In some embodiments, the remote server 200 can also transmit information related to relevant users to the battery energy station 100 through the network 210. Thus, the battery energy station 100 can perform related tasks based on the information received from the remote server 200.

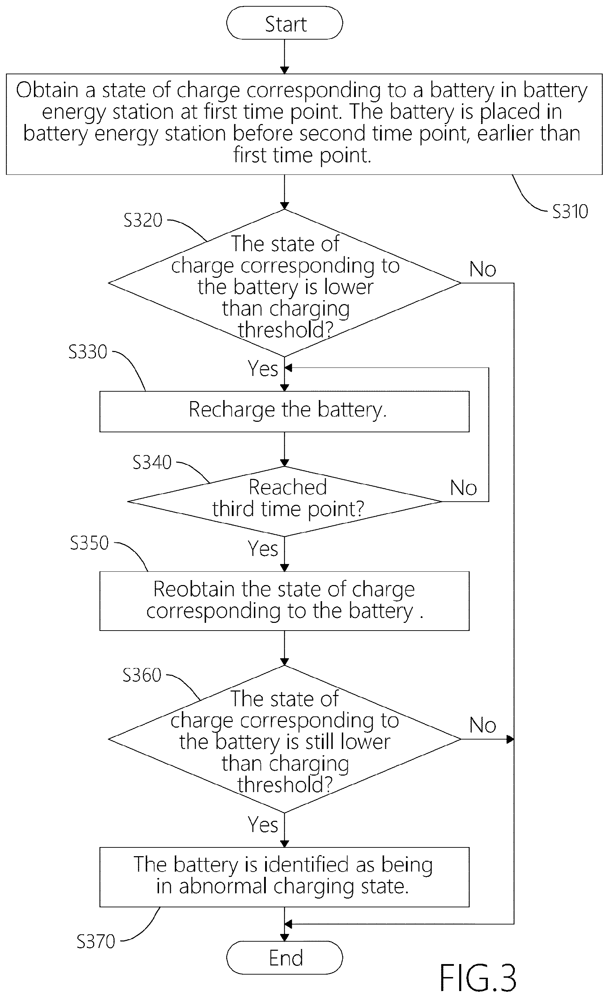

With reference to Fig. 3, Fig. 3 is a flow diagram of one embodiment of a detection method for an abnormally charged battery of the present invention. The detection method is for use in an electronic device that stores and charges a battery 112, such as the battery energy station 100 mentioned in Fig. 1. In some embodiments, the detection method is for use in an electronic device that stores and charges multiple batteries.

Firstly, as in step S310, obtain a state of charge (SOC) corresponding to a battery 112 at a first time point. It is worth noting that, in step S310, the battery 112 that is to be detected is placed in the battery energy station 100 before a second time point, and the second time point is earlier than the first time point. In some embodiments, the second time point can be at midnight, and the first time point can be at 3 AM. It should be pointed out that, the first time point and the second time point are embodiments for the present invention, and not limited to this. The first time point and the second time point can be configured according to different needs and applications. In some embodiments, when the detection method is for use in the electronic device that stores and charges multiple batteries, the batteries are detected sequentially.

In addition, as in step S320, determine whether the SOC corresponding to the battery 112 is lower than a charging threshold at the first time point. It should be noted that, in some embodiments, the charging threshold can be 95% of a battery capacity of the battery 112. It should be pointed out that, the charging threshold is an embodiment for the present invention, and not limited to this. When the SOC corresponding to the battery 112 is higher than the charging threshold, corresponding to the "no" path in step S320, the process terminates. When the SOC corresponding to the battery 112 is lower than the charging threshold, corresponding to the "yes" path in step S320, as in step S330, recharge the battery 112. It should be noted that, in some embodiments, the battery energy station 100 can charge the battery 112 by restarting a charging pin.

Furthermore, as in step S340, determine whether the current time has reached a third time point. It should be noted that, the third time point is later than the first time point. In some embodiments, the third time point can be at 5:30 AM. It should be pointed out that, the third time point is an embodiment for the present invention, and not limited to this. The third time point can be configured according to different needs and applications. When the current time has not reached the third time point, corresponding to the "no" path in step S340, the process returns to step S330. When the current time has reached the third time point, corresponding to the "yes" path in step S340, as in step S350, reobtain the SOC corresponding to the battery 112, and as in step S360, determine whether the SOC corresponding to the battery 112 is still lower than the charging threshold. When the SOC corresponding to the battery 112 is higher than the charging threshold, corresponding to the "no" path in step S360, the process terminates. When the SOC corresponding to the battery 112 is still lower than the charging threshold, corresponding to the "yes" path in step S360, as in step S370, identify the battery 112 as being in an abnormal charging state.

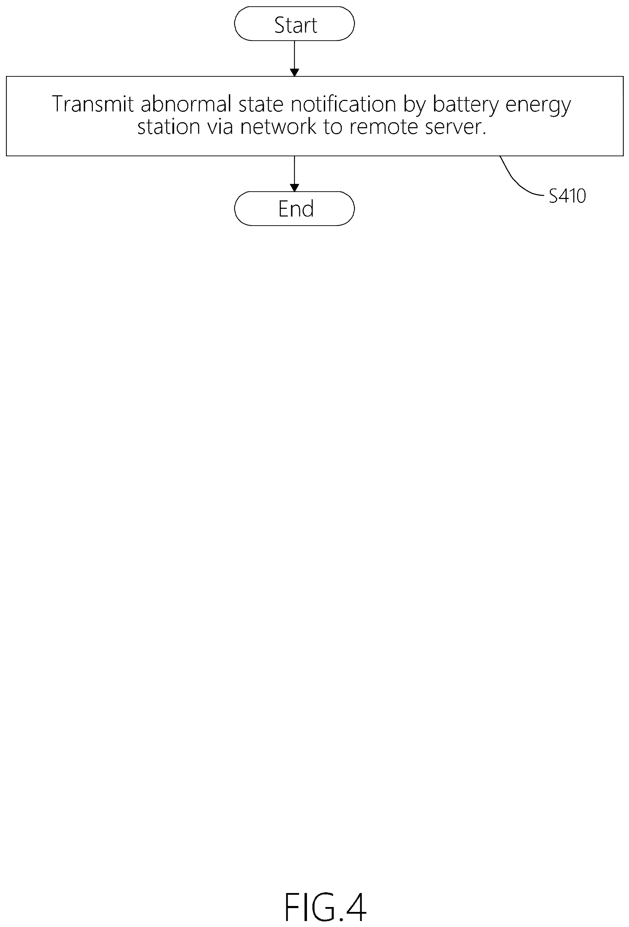

With reference to Fig. 4, Fig. 4 is a flow diagram of another embodiment of the detection method for the abnormally charged battery of the present invention. The detection method is for use in an electronic device that stores and charges a battery 112, such as the battery energy station 100 mentioned in Fig. 1. In the embodiment, when the battery 112 is identified as being in the abnormal charging state, as in step S410, the battery energy station 100 can transmit an abnormal state notification through a network 210, such as the wired network, the telecommunications network, or the wireless network, such as the Wi-Fi network, to a remote server 200.

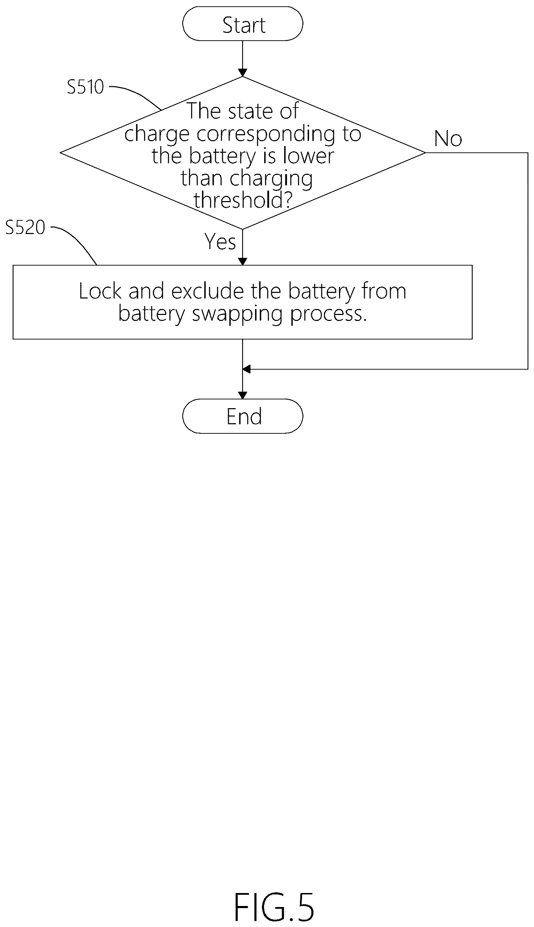

With reference to Fig. 5, Fig. 5 is a flow diagram of further another embodiment of the detection method for the abnormally charged battery of the present invention. The detection method is for use in an electronic device that stores and charges a battery 112, such as the battery energy station 100 mentioned in Fig. 1. In the embodiment, when the SOC corresponding to the battery 112 is higher than the charging threshold at the third time point, corresponding to the "no" path in step S510, the process terminates. When the SOC corresponding to the battery 112 is still lower than the charging threshold at the third time point, corresponding to the "yes" path in step S510, as in step S520, the battery energy station 100 locks the battery 112, and excludes the battery 112 from a battery swapping process. In other words, the battery 112 that is identified as being in the abnormal charging state will not be swapped out to the user during the battery swapping process. It should be noted that, in some embodiments, the battery 112 that is identified as being in the abnormal charging state will not be excluded from subsequent battery swapping process. That is, the battery 112 that is identified as being in the abnormal charging state can still be swapped out to the user during the battery swapping process.

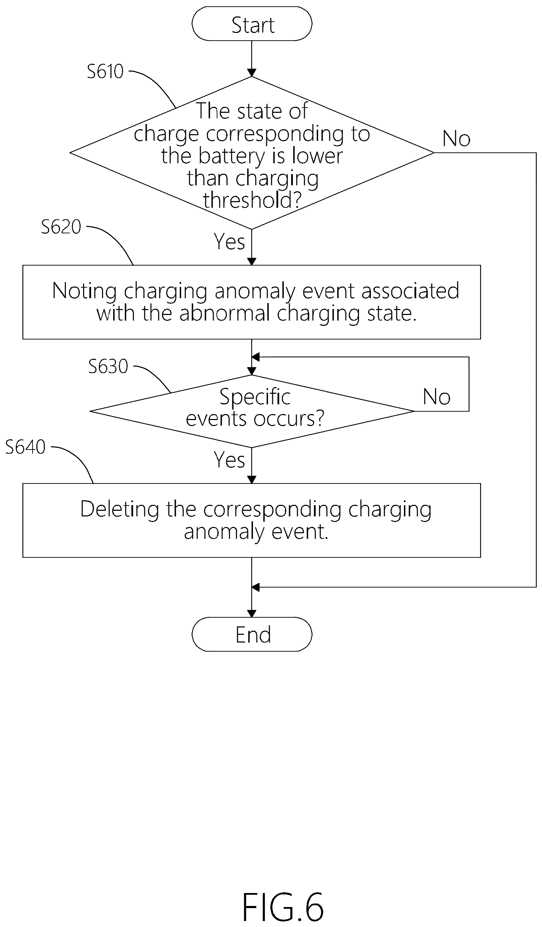

With reference to Fig. 6, Fig. 6 is a flow diagram of yet another embodiment of the detection method for the abnormally charged battery of the present invention. The detection method is for use in an electronic device that stores and charges a battery 112, such as the battery energy station 100 mentioned in Fig. 1. In the embodiment, when the SOC corresponding to the battery 112 obtained at the third time point is higher than the charging threshold, corresponding to the "no" path in step S610, the process terminates. When the SOC corresponding to the battery 112 obtained at the third time point is still lower than the charging threshold, corresponding to the "yes" path in step S610, as in step S620, the battery energy station 100 notes a charging anomaly event associated with the abnormal charging state corresponding to the battery. Furthermore, as in step S630, determine whether a specific event occurs at the battery energy station 100. It is worth noting that, in some embodiments, the specific event can be the state of charge corresponding to the battery 112 being higher than the charging threshold, the battery 112 being taken out from the battery energy station 100 during the battery swapping process, or the battery energy station 100 being restarted. When no specific event occurs at the battery energy station 100, corresponding to the "no" path in step S630, continue the determination in step S630. When the specific event occurs at the battery energy station 100, corresponding to the "yes" path in step S630, as in step S640, delete the charging anomaly event.

Therefore, the detection method for the abnormally charged battery and the battery energy station 100 thereof can automatically charge the battery 112 and determine whether the battery 100 is an abnormally charged battery based on the SOC of the battery 112 at different time points, avoiding battery charging abnormalities caused by problems with the battery energy station 100, or risks to users due to abnormally charged batteries.

The method of the present invention, or specific forms or portions thereof, may exist as program code. The program code may be contained in a physical medium, such as a floppy disk, CD-ROM, hard drive, or any other machine-readable (e.g., computer-readable) storage medium, or a computer program product not limited to its external form, wherein, when the program code is loaded and executed by a machine, such as a computer, this machine becomes an apparatus for participating in the present invention. The program code may also be transmitted via a transmission medium, such as a wire or cable, optical fiber, or any form of transmission, wherein, when the program code is received, loaded, and executed by a machine, such as a computer, this machine becomes an apparatus for participating in the present invention. When implemented in a general-purpose processor unit, the program code, in conjunction with the processor unit, provides a unique apparatus that operates similarly to application-specific logic circuits.

While the present invention has been disclosed as above with preferred embodiments, it is not intended to limit the present invention. Any person skilled in the art can make slight modifications and embellishments without departing from the spirit and scope of the present invention. Therefore, the protection scope of the present invention shall be defined by the appended claims.

## Claims

1. A detection method for an abnormally charged battery, adapted to a battery energy station, and **characterized in that** the detection method comprises steps of:
obtaining a state of charge corresponding to a battery (112) in the battery energy station (100) at a first time point; wherein, the battery (112) is placed in the battery energy station (100) before a second time point; wherein, the second time point is earlier than the first time point;
determining whether the state of charge corresponding to the battery (112) is lower than a charging threshold at the first time point;
when the state of charge corresponding to the battery (112) is lower than the charging threshold, recharging the battery (112);
reobtaining the state of charge corresponding to the battery (112) at a third time point, and determining whether the state of charge corresponding to the battery (112) is still lower than the charging threshold; wherein, the third time point is later than the first time point; and
when the state of charge corresponding to the battery (112) is still lower than the charging threshold at the third time point, identifying the battery (112) as being in an abnormal charging state.

2. The detection method as claimed in claim 1, further comprising a step of:
transmitting an abnormal state notification via a network (210) to a remote server (200).

3. The detection method as claimed in claim 1, wherein, when the state of charge corresponding to the battery (112) is still lower than the charging threshold at the third time point, locking the battery (112), and excluding the battery (112) from a battery swapping process.

4. The detection method as claimed in claim 1, further comprising steps of:
when the state of charge corresponding to the battery (112) is still lower than the charging threshold at the third time point, noting a charging anomaly event associated with the abnormal charging state corresponding to the battery (112);
determining whether a specific event occurs; and
when the specific event occurs, deleting the charging anomaly event.

5. The detection method as claimed in claim 4, wherein, the specific event comprises at least one of: the state of charge corresponding to the battery (112) being higher than the charging threshold, the battery (112) being taken out during a battery swapping process, or the battery energy station (100) being restarted.

6. A battery energy station (100), **characterized in that** the battery energy station (100) comprises:
a battery storage system (110), configured to store a battery (112); wherein the battery (112) is placed in the battery storage system (110) before a second time point;
an energy module (120), configured to charge the battery (112); and
a processor unit (140), coupled to the battery storage system (110) and the energy module (120), and obtaining a state of charge corresponding to the battery (112) at a first time point, wherein, the second time point is earlier than the first time point;
wherein, the processor unit (140) determines whether the state of charge corresponding to the battery (112) is lower than a charging threshold at the first time point;
wherein, when the state of charge corresponding to the battery (112) is lower than the charging threshold, the processor unit (140) recharges the battery via the energy module (120), reobtains the state of charge corresponding to the battery (112) at a third time point, and determines whether the state of charge corresponding to the battery (112) is still lower than the charging threshold; wherein, the third time point is later than the first time point;
wherein, when the state of charge corresponding to the battery (112) is still lower than the charging threshold at the third time point, the processor unit (140) identifies the battery (112) as being in an abnormal charging state.

7. The battery energy station (100) as claimed in claim 6, wherein the processor unit (112) transmits an abnormal state notification through a network (210) to a remote server (200) via a network connection unit (130).

8. The battery energy station as claimed in claim 6, wherein when the state of charge corresponding to the battery (112) is still lower than the charging threshold at the third time point, the processor unit locks the battery, and excludes the battery from a battery swapping process.

9. The battery energy station (100) as claimed in claim 6, wherein when the state of charge corresponding to the battery (112) is still lower than the charging threshold at the third time point, the processor unit (140) notes a charging anomaly event associated with the abnormal charging state corresponding to the battery (112), and determines whether a specific event occurs;
wherein when the specific event occurs at the battery energy station (100), the processor unit (140) deletes the charging anomaly event.

10. The battery energy station (100) as claimed in claim 9, wherein, the specific event comprises at least one of: the state of charge corresponding to the battery (112) being higher than the charging threshold, the battery (112) being taken out during a battery swapping process, or the battery energy station (100) being restarted.
